# EUROPEAN PATENT SPECIFICATION

(11) **EP 1 839 321 B1**
(45) Date of publication and mention of the grant of the patent: **01.09.2010**
(21) Application number: 06700498.6
(22) Date of filing: 09.01.2006
(51) Int. Cl.: H01H 71/00, H01H 71/10, H01H 73/52

(54) **DIFFERENTIAL THERMOMAGNETIC SWITCH**
THERMOMAGNETISCHER DIFFERENTIALSCHALTER
COMMUTATEUR THERMOMAGNETIQUE DIFFERENTIEL

(30) Priority: 17.01.2005 IT MI20050042
(43) Date of publication of application: 03.10.2007
(73) Proprietor: Vimar SpA, 36063 Marostica (VI) (IT)
(72) Inventor: GUSI, Piero, Camillo, I-36063 Marostica (VI) (IT)
(74) Representative: Petruzziello, Aldo
(86) International application number: PCT/EP2006/000088
(87) International publication number: WO 2006/074883

(56) References cited:
- EP-A- 0 042 778
- EP-A- 0 696 041
- US-A- 3 388 358
- US-A- 4 206 430

## Description

The present invention refers to an automatic switch of the thermomagnetic or differential thermomagnetic type, small in size and particularly suitable for a modular mounting in civil supports and series plates, to protect the users from short circuits and from current overloads on apparatuses downstream of said automatic switch.

Switches of the differential thermomagnetic type designed to open/close the electrical supply circuit when a short circuit, an overload or a leakage of current is detected in the apparatus downstream of the automatic switch are currently widely available on the market. These switches ensure a high cut-off capacity, that is to say a rapid separation of the electrical contacts, when an abnormality is detected in the apparatuses downstream.

However, the switches of the differential thermomagnetic type of the prior art present the main drawback of comprising a large number of components, which are suitably assembled to ensure a rapid and safe separation of the electrical contacts of the switch. In addition to making the switch excessively complex, this leads to high production and assembly costs thereof. Such a switch is known e.g. from the document US-A-4 206 430.

Object of the present invention is to eliminate the drawbacks of the prior art by providing a thermomagnetic or a differential thermomagnetic switch that has a simplified structure and at the same time is also inexpensive and simple to produce and to assemble.

This object is achieved in accordance with the invention with the characteristics listed in the appended independent claim 1.

Advantageous embodiments of the invention are apparent from the dependent claims.

The thermomagnetic switch according to the invention comprises a box-type body comprising an intermediate wall, which defines a phase housing and a neutral housing. Housed in the phase and in the neutral housing, respectively, there are:
- a fixed phase contact connected to a phase terminal destined to clamp the strands of a phase electrical wire, and
- a fixed neutral contact connected to a neutral terminal destined to clamp the strands of a neutral electrical wire.

A movable phase contact and a movable neutral contact are destined to go into contact with the respective fixed phase and neutral contacts.

The movable contacts are connected to a kinematic mechanism able to bring them from a closed position in contact with the respective fixed contacts to an open position away from said fixed contacts.

An operating push button which can be operated from the outside and a coupling lever are connected to the kinematic mechanism. The coupling lever can be operated by the intervention of a thermal device and/or of an electromagnetic device and/or of a differential device.

The kinematic mechanism comprises a contact-carrying lever made in a single piece and provided with two arms, which extend into the phase housing and into the neutral housing. Each arm of the contact-carrying lever comprises a seat designed to receive the respective movable phase and neutral contact. The contact-carrying lever is pivoted, by means of a pivot pin, to the intermediate wall.

Further characteristics of the invention will be made clearer by the detailed description that follows, referring to a purely exemplifying and therefore non-limiting embodiment thereof, illustrated in the appended drawings, in which:
- Figure 1 is an elevation view of the differential thermomagnetic switch in accordance with the invention:
- Figure 2 is a side view taken in the direction of the arrows II-II of Figure 1, in which the side casing has been removed, and illustrating the phase part of the thermomagnetic switch with the contacts open;
- Figure 2A is a view like Figure 2, illustrating the phase part of the thermomagnetic switch with the contacts closed;
- Figure 2B is a view like Figure 2, illustrating the phase part of the thermomagnetic switch in a snap position, that is to say in an intermediate position of the contact opening step;
- Figure 3 is a side view taken in the direction of the arrows III-III of Figure 1, in which the cover has been removed, and illustrating the neutral part of the thermomagnetic

switch with the contacts open;
- Figure 4 is an electrical diagram schematically illustrating the operation of the thermomagetic-differential switch;
- Figure 5 is a side view illustrating the contact-carrying lever, movable contacts and transmission levers assembly of the switch in accordance with the invention;
- Figure 6 is a top plan view of the assembly of Figure 5;
- Figure 7 is a perspective view of the contact-carrying lever;
- Figure 8 is a partially sectional side view illustrating the electromagnetic coil, bimetallic plate and movable phase contact assembly of the thermomagnetic switch;
- Figure 9 is a top plan view of the electromagnetic coil of Figure 8;
- Figure 10 is an axial sectional view illustrating the electromagnetic coil of the differential circuit of the switch according to the invention;
- Figure 11 is a side view of the coupling lever of the switch according to the invention in which the return spring is pre-mounted;
- Figure12 is a perspective view of the coupling lever of Figure 11;
- Figure 13 is a side view like Figure 3 illustrating the feed spring of the differential release coil; and
- Figure 14 is a side view illustration the cover of the neutral part in which the feed spring of the differential release coil is pre-mounted.

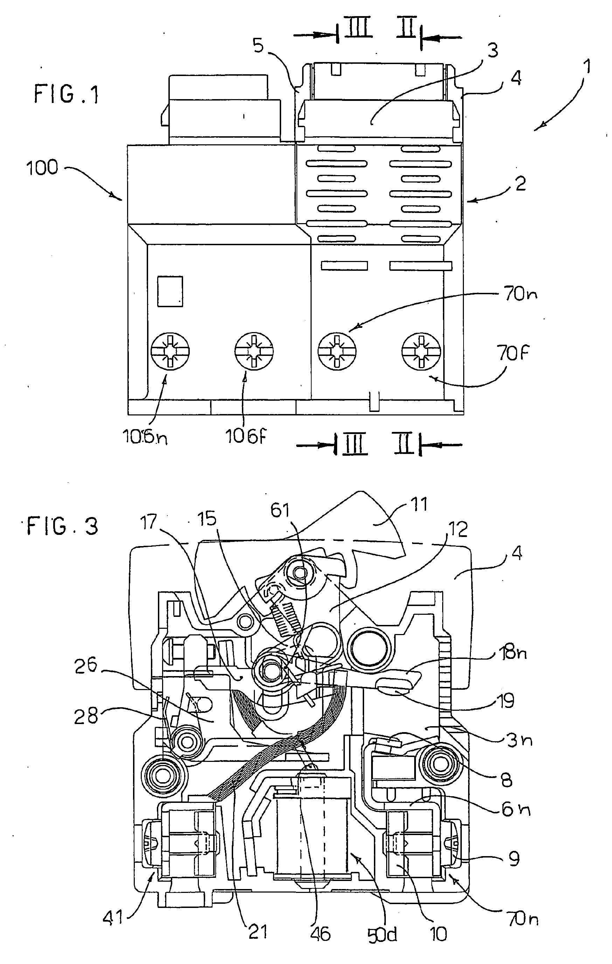

Figure 1 shows a differential thermomagnetic switch in accordance with the invention, in its complete version, indicated as a whole with the reference numeral 1.

The switch 1 comprises two box-type blocks next to each other: the thermomagnetic switch block 2 and the differential circuit block 100.

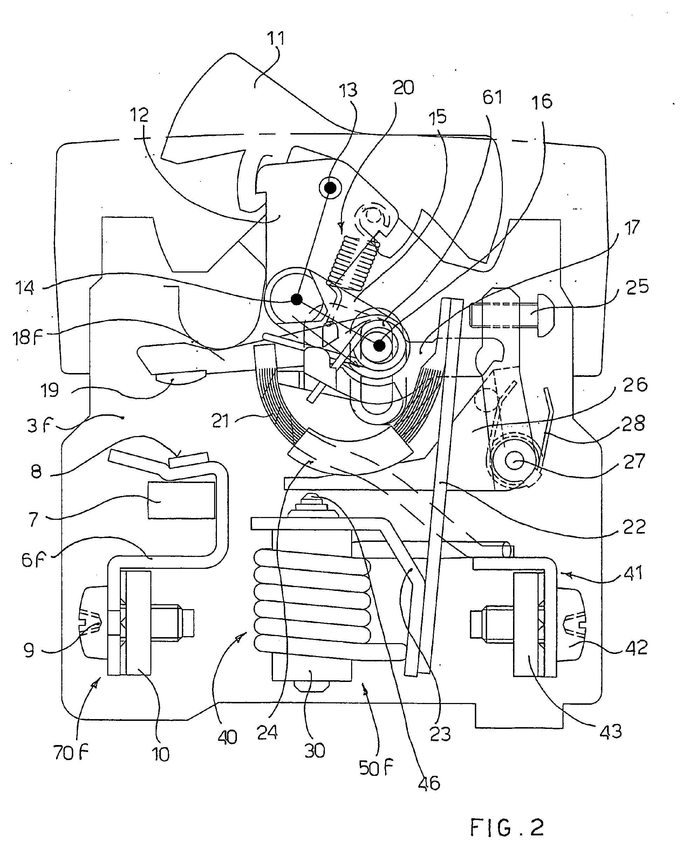

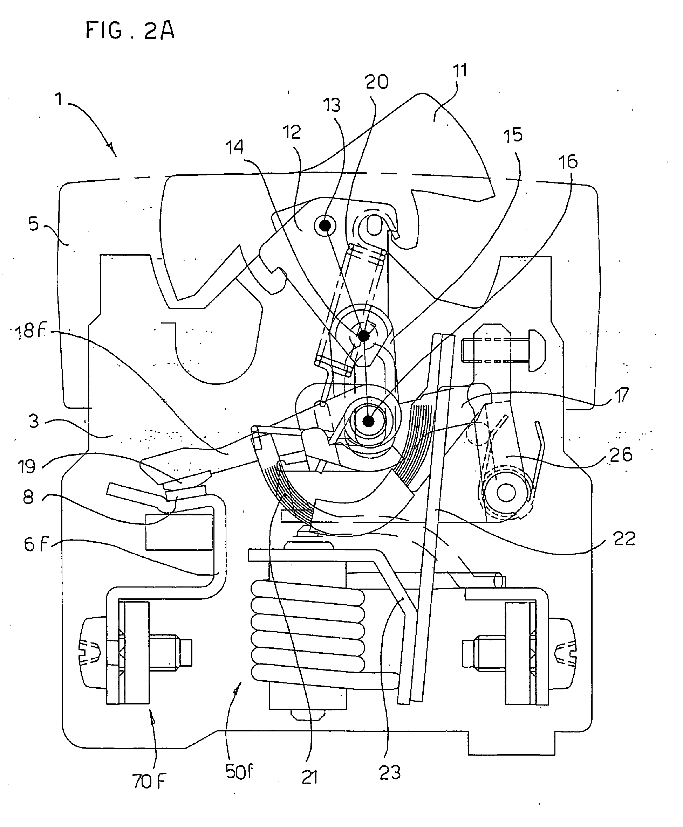

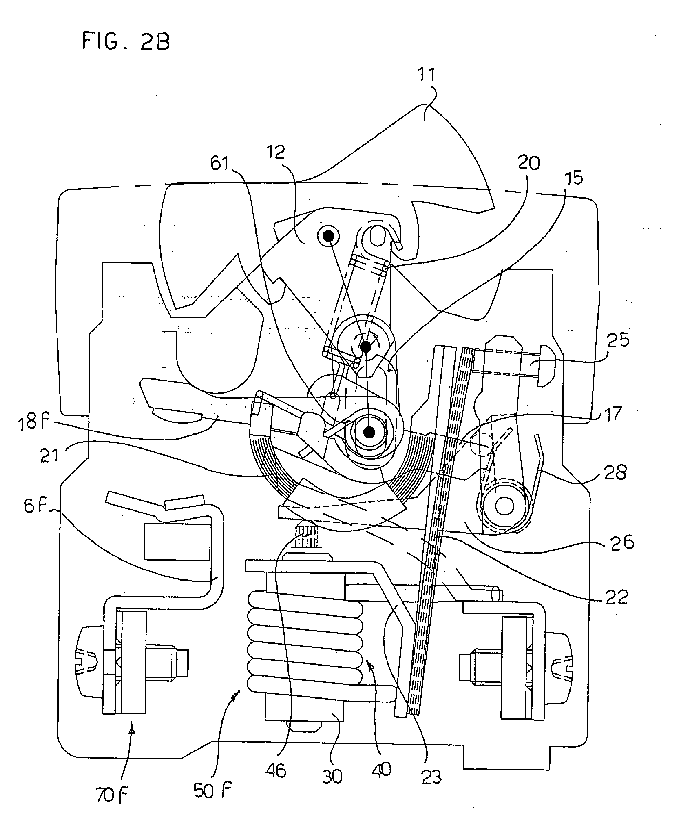

The thermomagnetic switch block 2 comprises a two-faced intermediate wall 3, which defines and separates two opposite housings 3f and 3n:
- a first housing 3f (Fig. 2), called the phase housing since it houses a fixed contact 6f destined to be connected to the phase (supply) line of the electrical system, and
- a second housing 3n (Fig. 3), called the neutral housing since it houses a fixed contact 6n destined to be connected to the neutral (earth) line of the electrical system.

Returning to Figure 1, said housings 3f e 3n are covered by respective removable covers 4 and 5.

Hereunder, to describe the components of the switch, specific reference will be made to Figure 2 relating to the phase part thereof, it being understood that like or similar elements are also provided on the neutral part and are indicated with the same reference numerals.

Each fixed contact (6f, 6n) is in the form of a small metal plate suitably coil-curved and blocked in the respective housing (3f, 3n). The fixed contacts (6f, 6n) are in contact with the respective metal blocks 7, which serve as a heat sink.

A metal contact plate 8 is provided on the top part of the fixed contacts (6f, 6n). On the other hand, the bottom part of the fixed contacts (6f, 6n) is made so as to form a respective terminal strip (70n, 70f) for electrical wire strands. For this purpose the bottom part of the fixed contacts (6f, 6n) has a through hole through which a screw 9 engaging in the thread of a wire clamping plate 10 passes. In this manner the strands of the phase and of the neutral electrical cable can be clamped between the bottom of the respective fixed contacts (6f, 6n) and the respective wire clamping plates 10.

A slot in which is disposed a push button 11 formed by a rocker lever accessible to the user is provided in the top part of the block 2 of the switch (corresponding to the front part after installation). The push button 11 has a C-shaped seat at the bottom engaged integrally by the top part of a primary lever 12 pivoted, with an axis of pivoting 13, to the intermediate wall 3.

The bottom part of the primary lever 12 is pivoted, with an axis of pivoting 14, to the end of two transmission levers 15. One transmission lever 15 is disposed in the phase housing 3f and the other is disposed in the neutral housing 3n. The other end of the two transmission levers 15 is pivoted, with an axis of pivoting 16, to a central part of a contact-carrying lever 17.

A helical traction spring 20 has one end constrained to the top part of the primary lever 12 shifted with respect to the fulcrum 13 and another end constrained to the contact-carrying lever 17.

The primary lever 12, the transmission levers 15 and the contact-carrying lever 17 are made of plastic material. The primary lever 12 and the contact-carrying lever 17 are made in a single piece and each has two arms: one disposed in the phase housing 3f and the other disposed in the neutral housing 3n.

The contact-carrying lever 17 supports, by means of respective springs 61, two movable contacts (18f, 18n; Figure 3) in the form of elongated metal arms provided with a contact plate 19 destined to go into contact with the respective contact plate 8 of the fixed contacts (6f, 6n; Figure 3) of the phase part and the neutral part. The contact plates 19 of the movable contacts and the contact plates 8 of the fixed contacts are made with a shape and a chemical composition suitable to pass the tests required by the reference standards.

A plait of copper wires 21 connects the movable phase contact 18f to one end of a bimetallic plate 22. The plait of copper wires 21 is protected by an insulating sheath 24. The bimetallic plate 22 dilates when the temperature rises, if it is passed through by a high current.

The other end of the bimetallic plate 22 is fixed to a metal support or armature 23, consisting of a substantially upturned L-shaped bracket, made integral with the housing 3f. The metal support 23 supports the top part of a cylindrical spool 30 whereon a winding of copper windings 40 is wound so as to form a magnetic coil 50f. One end of the winding 40 is fixed to the metal support 23 and the other end of the winding is fixed to a plate 41 of a terminal opposite a cable clamping plate 43 connected by means of a screw 43 accessible from the outside of the switch box.

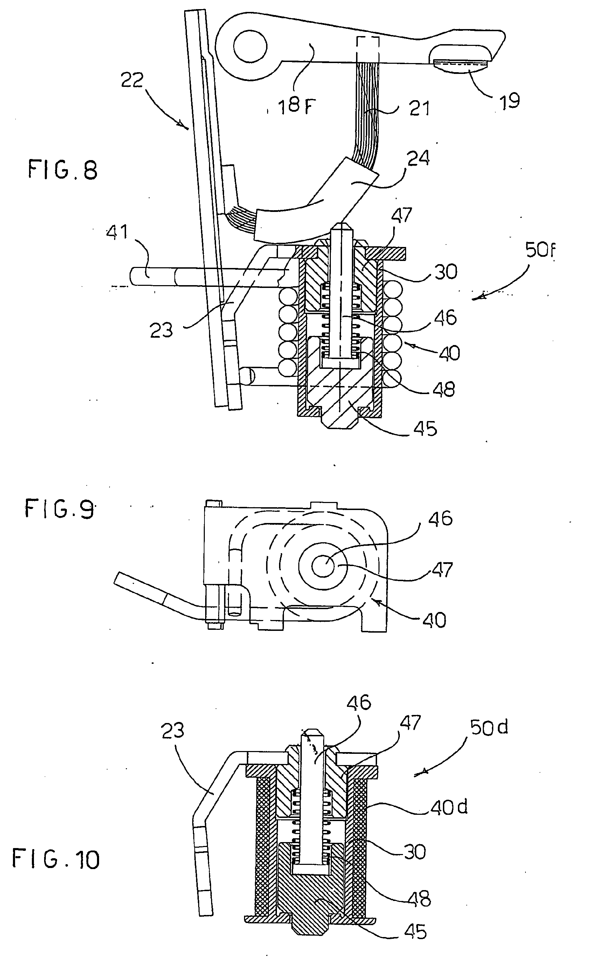

As shown in Figure 8, the spool 30 is hollow on the inside. A magnetic keeper 45 is mounted axially slidably inside the spool 30. The magnetic keeper 45 has a seat which houses one end of a thrust pin 46.

A magnetic core 47 is fixed inside the spool 30. The magnetic core 47 has an axial hole to allow the passage of a thrust pin 46, so that the tip of the thrust pin 46 comes out of the support 23 at the top.

A helical compression spring 48 is disposed around the thrust pin 46, with one end abutting on the head of the thrust pin and the other end abutting in a seat of the magnetic core 47. In this manner, when the keeper 45 is attracted by the magnetic core 47, the keeper 45 moves axially towards the magnetic core 47, pushing the thrust pin 46 upward, against the action of the compression spring 48 that is loaded by compression. When the attraction of the magnetic core 47 is ended, the magnetic keeper returns to the starting position, due to the thrust of the spring 48, which is released.

Returning to Figure 2, the end of the bimetallic plate 22 to which the plait of copper wires 21 is connected is near to the tip of a screw 25 supported at one end by an L-shaped coupling lever 26 pivoted to the intermediate wall 3 by the axis of pivoting 27. Beneath the screw 25, the coupling lever 26 is connected to the end of the contact-carrying lever 17 on the side opposite to that in which the movable contacts 18f and 18n are situated. The coupling lever 26 is kept in place by respective torsion springs 28 disposed around the axis of pivoting 27 in the phase housing 3f and in the neutral housing 3n.

It must be noted that the end of the coupling lever 26 distal to the screw 25 is situated above and near to the tip of the thrust pin 46, when the magnetic core is not excited.

In this manner, if the thrust pin 46 is pushed upward through the action of the magnetic core, it pushes the coupling lever 26, which rotates around the pin 27 pulling the contact-carrying lever 17.

Likewise, if the bimetal strip 22 dilates through an excess of current passing therethrough, the end thereof pushes the screw 25 of the coupling lever 16 causing rotation thereof around the axis of pivoting 27.

With reference to Figure 3, a magnetic coil 50d connected to the differential circuit integrated in a circuit board disposed within the differential block 100 (Figure 1) is provided in the neutral housing 3n. As shown in Figure 10, the magnetic coil 5d of the differential circuit is similar to the phase magnetic coil 50f. The only difference is represented by the fact that the magnetic coil 50d has around the spool 30 an insulated copper wire 40d wound in a far greater number of windings with respect to the windings 40 of the phase coil.

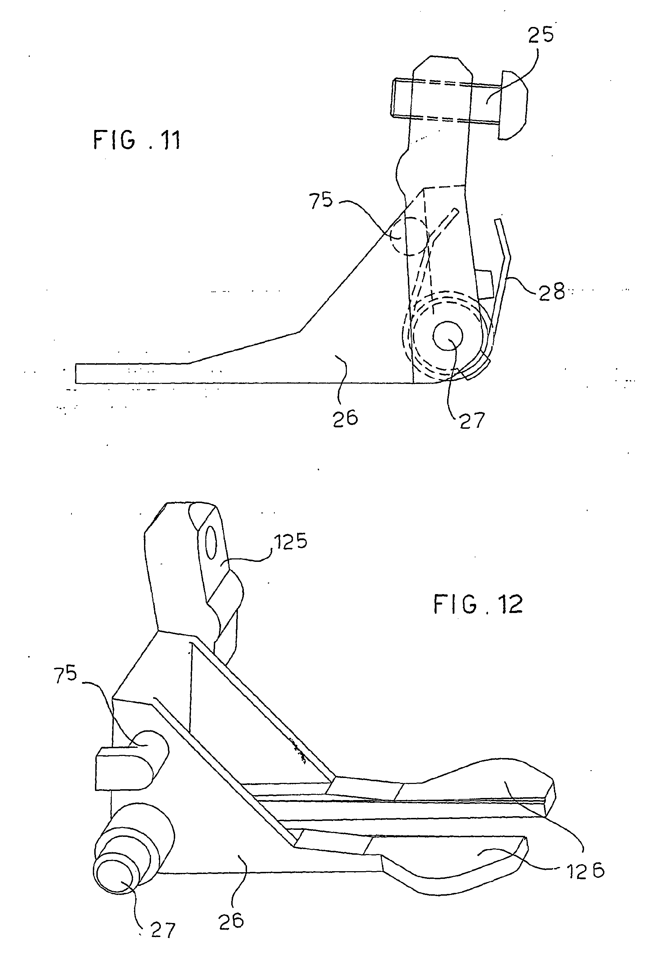

The tip 46 of the thrust pin of the differential coil 50d is situated beneath the end of the coupling lever 26. Clearly the coupling lever 26 has two bottom arms 126 (Figure 12). One arm 126 of the coupling lever is disposed in the phase housing 3f and the other arm 126 in the neutral housing 3n.

Again with reference to Figure 3, it must be considered that the bimetallic strip is not provided in the neutral housing 3n, therefore the L-shaped support 23 serves only to support the coil 50d of the differential circuit. Therefore the neutral contact 18n is connected by means of a copper plait 21 directly to a terminal strip 41 of the neutral.

Operation of the differential thermomagnetic switch 1 will be described hereunder.

With reference to Figures 2 and 3 the switch 1 is illustrated in the situation wherein the movable phase and neutral contacts 18f and 18n are open that is separated from the respective fixed contacts 6f and 6n.

At this point, the user manually operates the push button 11 bringing it into the closed position illustrated in Figure 2A. The movement of the push button 11 causes rotation of the primary lever 12 around its fulcrum 13. Thus the axis of pivoting 14 of the two transmission levers 15 moves and consequently the contact-carrying lever 17 rotates around its fulcrum 16 bringing the movable contacts (18f, 18n) into contact with the fixed contacts (6f, 6n).

The primary lever 12, the transmission levers 15 and the contact-carrying lever 17 integral with the movable contacts (18f, 18n) form a toggle mechanism. Said toggle mechanism remains stably in a closed circuit position, resting at one end on the two fixed contacts (6f, 6n) by means of the two movable contacts (18f, 18n) and at the other end resting on the coupling lever 26 by means of the contact-carrying lever 17. The two transmission levers 15, suitably sized, form a "knee" and thanks to the traction spring 20 the mechanism proves stable.

The mechanism can be operated manually by pressing with a finger the push button 11 from the outside of the switch, or it can be released automatically through the effect of three different automatic devices (a thermal device, an electromagnetic device and a differential device) situated inside the apparatus 1.

### Thermal intervention

The toggle mechanism can release automatically and thus break the electric circuit through the effect of the intervention of the thermal device.

The thermal device is realized with a lever 22 made of a bimetallic alloy, which is deformed through the effect of the temperature produced by the current that passes therethrough. By means of the deformation of the end of the bimetallic lever 22 the coupling lever 26 is operated.

The distance between the bimetallic lever 22 and the coupling lever 26 is factory calibrated, and is obtained by tightening or loosening the screw 25 situated on the coupling lever 26. When the bimetallic lever 22 touches the screw 25, it causes an unbalancing of the toggle mechanism which through the effect of the traction spring 20 rapidly detaches the two movable contacts (18f, 18n) from the two fixed contacts (6f, 6n) and returns to the resting position, as illustrated in Figure 2B. The coupling lever 26 also returns to the resting position due to the force produced by the torsion spring 28.

It follows that by means of the thermal device the electrical system upstream of the automatic switch remains protected from overloads of the electrical equipments downstream of the switch.

Three different models of thermal relays have been produced, suitably sized according to the nominal current and to the intervention parameters required by the reference standards: one for the C6 version, one for the C10 version and one for the C16 version. The thermal device for the C10 and C16 versions is a direct heating device that is the plait 21 of the movable phase contact 18f is directly connected with the end of the bimetallic lever 22.

The thermal device for the C6 version is an indirect heating device that is a heater which serves to increase the temperature to obtain the necessary deformation of the lever 22 is interposed between the plait 21 and the bimetallic lever 22.

### Electromagnetic intervention

The toggle mechanism can release automatically and thus interrupt the electrical circuit through the effect of an electromagnetic device.

The electromagnetic device comprises the coil 50f consisting of the winding 40 placed around the spool 30. The spool 30 is fixed on the switch by means of the support or metal armature 23.

In case of a short circuit, through the effect of the magnetic field that forms in the coil 50f, the thrust pin 46 is translated by the magnetic keeper 45 through the effect of attraction towards the magnetic core 47. This translation is regulated by the force of the compression spring 48 to observe the parameters required by the reference standards.

The tip of the thrust pin 46 operates one end of the coupling lever 26 with consequent unbalancing of the toggle mechanism. In this situation, as shown in Figure 2B, the toggle mechanism, through the effect of the traction spring 20, rapidly detaches the two movable contacts (18f, 18n) pressed by the respective springs 61, moving them away from the two respective fixed contacts (6f, 6n) and returns to the resting position. The coupling lever 26 also returns to the resting position due to the force produced by the torsion spring 28.

It follows that through the effect of the electromagnetic device the apparatuses downstream of the automatic switch remain protected from the short circuits.

Three different models of electromagnetic devices suitably sized according to the nominal current and to the intervention parameters of the reference standards have been produced: one for the C6 version, one for the C10 version and one for the C6 version.

### Differential intervention

The toggle mechanism can release and thus break the electrical circuit through the effect of the differential device.

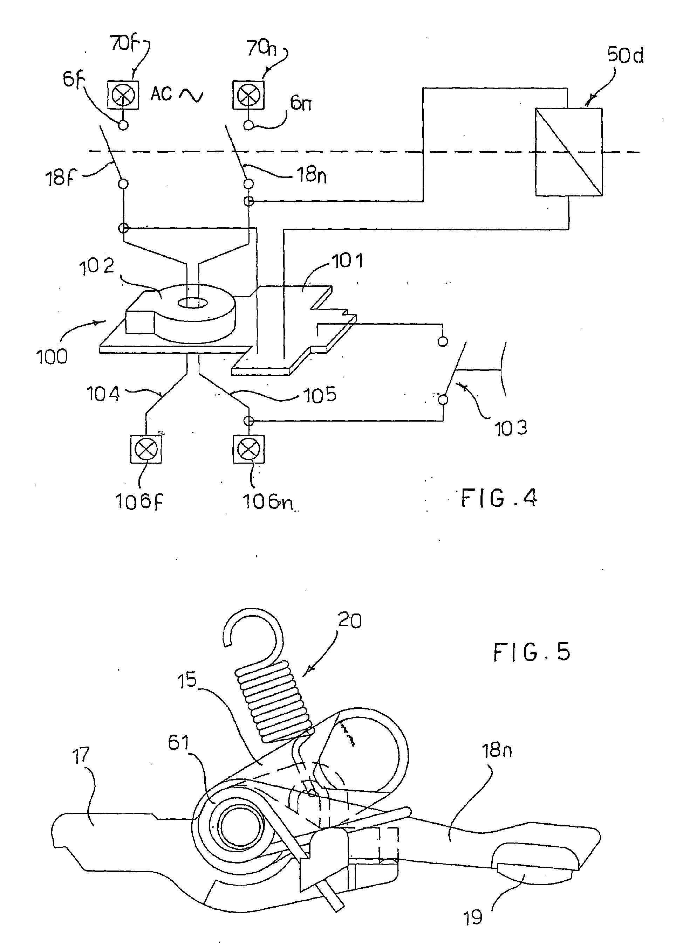

As shown diagrammatically in Figure 4, the differential device situated inside the differential block 100 comprises a differential electronic circuit mounted on a circuit board 101, a toroidal core 102 mounted on the circuit board 101 and the differential release coil 50d, which is disposed in the neutral housing 3n.

A primary winding and a secondary winding are formed in the toroidal core 102. The primary winding consists of two electrically insulated cables 104 and 105 connected to respective phase and neutral terminals 106f and 106n of the differential block 100.

The differential release coil 50d is composed of a copper wire 40d (Figure 10) wound in the spool 30 fixed to the switch by means of the metal armature 23. The winding 40d has one end connected to the differential circuit board 101 and the other end connected to the cable 105 of the primary winding connected to the neutral terminal 106n.

In the presence of a differential current (caused by a leakage towards earth) the coil 50d is "excited". Inside the spool 30, the magnetic core 47 attracts towards it the movable keeper 45 to which the thrust pin 46 is assembled. Through the effect of the translation produced by the movement of the magnetic keeper 45, the thrust pin 46 operates one end of the coupling lever 26 with consequent unbalancing of the toggle mechanism.

At this point, as shown in Figure 2B, through the effect of the traction spring 20 the toggle mechanism rapidly detaches the two movable contacts (18f, 18n) from the respective fixed contacts (6f, 6n) and returns to the resting position.

It follows that, through the effect of the differential device, the electrical system and the apparatuses downstream of the automatic-differential switch remain protected from a current leakage towards earth.

Disposed inside the differential switch 100 there is a test switch 103 connected between the differential circuit board 101 and the neutral terminal 106n of the differential switch. The test switch 103 allows the good operation of the differential thermomagnetic switch 1 to be checked periodically, as required by the reference standards.

The test device is composed of a push button that can be operated manually from the outside of the switch and of a torsion spring for the test button. On pressing the test push button, the spring made of an electrically conductive material is put into contact with a resistance suitably connected in an electrical test circuit, wherein an insulated test cable is also used to simulate a leakage towards earth. The intervention of the differential switch indicates that the apparatus is in an efficient state.

The electrical insulation towards the outside of the switch as well as between phase and neutral and the mechanical protection from solid foreign bodies are ensured by a shell of an insulating thermoplastic material composed of three pieces: the phase cover 4 combined with the intermediate two-faced wall 3 and lastly the neutral cover 5.

In the version which also includes the differential device (differential thermomagnetic switch) the shell of an insulating thermoplastic material is composed of three pieces. The phase cover 4 is the same of the solely thermomagnetic switch, while the differential versions of the intermediate two-faced wall 3 and of the neutral cover 5 include some necessary differences with respect to the solely thermomagnetic version. The shell composed of three pieces is closed by means of three self-tapping screws with a thread suitable for a thermoplastic material.

The bipolar differential terminal strip of the differential switch 100 allows the cabling of the conductors for the electrical connection of the differential switch (from the line towards the user or vice versa) and ensures the electrical insulation between phase and neutral. Two terminals (106f, 106n), composed of wire clamping plates and of terminal screws M3 both single slotted for a flat screwdriver and cross-slotted for a PZ2 screwdriver (Pozidrive size 2), are assembled inside the bipolar differential terminal strip. The fixed part of the terminals consists of two connections per terminal.

The electrical insulation towards the outside of the switch and the mechanical protection of the differential switch from solid foreign bodies are ensured by the differential shell 100, connected to the thermomagnetic switch by means of two self-tapping screws with a thread suitable for a thermoplastic material.

It must be considered that the switch according to the invention comprises a smaller number of pieces than the known switches of the same type. In fact the thermomagnetic switch comprises 48 pieces, whilst the differential thermomagnetic switch comprises 65 pieces.

This objective is achieved by making in a single piece the contact-carrying lever 17 which supports the two contacts 18f and 18n for phase and neutral. The coupling lever 26 also has been made in a single piece and can be operated both by the electromagnetic coil 50f of the phase pole and by the differential release coil 50d situated in the neutral pole.

Furthermore multi-function pieces - better described hereunder - have been designed, the terminals (106f, 106n) of the differential have been rationalised and the majority of the components of which the differential thermomagnetic switch is composed have been simplified as regards the shape, the mechanical working and the assembly.

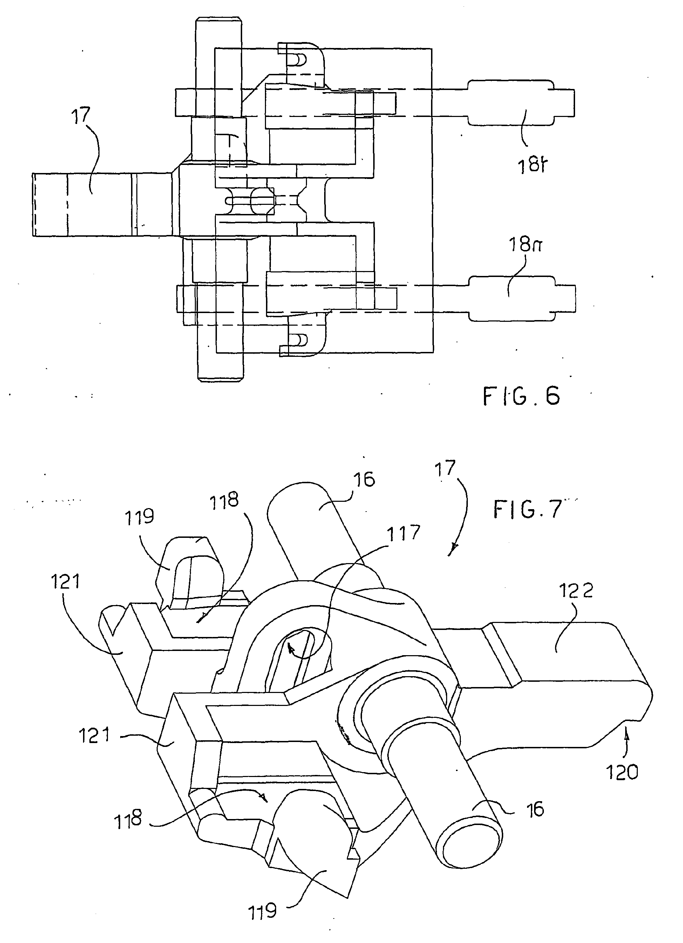

In particular, as shown in Figures 5, 6 and 7 the contact-carrying lever 17 serves as:
a) the seat of the two movable contacts (18f 18n),
b) the seat of the two torsion springs 61,
c) the seat of the traction spring 20 of the toggle kinematism, and
d) the seat of the two transmission levers 15 made of a thermoplastic material.

Furthermore the contact-carrying lever 17 has two guide pins for the sliding thereof with respect to the phase shell and to the neutral cover.

For this purpose, the contact-carrying lever 17 comprises two arms 121 which extend into the phase housing 3f and into the neutral housing 3n, in a fork configuration. Two seats 118 for the movable contacts 18f and 18n are formed in the two arms 121 of the contact-carrying lever.

The torsion springs 61 are disposed around the pins 16 and are blocked by respective protrusions 119 disposed near the housings 118. The end of the traction spring 20 is hooked in a slot 17 formed centrally above the pins 16. The ends of the two transmission levers 15 are pivoted in the pins 16.

The contact-carrying lever 17 comprises a coupling arm 122 disposed in the opposite direction with respect to the arms 121 of the seats of the movable contacts. The end of the coupling arm 122 has an undercut shape 120 designed to engage with the coupling lever 26.

Moreover the contact-carrying lever 17 also acts as a pin 16 for the kinematism of the toggle mechanism. It must be considered that in other apparatuses of the same category the pin of the toggle mechanism is made separately, in one or in two pieces.

In particular, as shown in Figures 8, 9, 10, the simple armature for the phase coil 50f and for the differential coil 50d is made with a single piece, that is to say the supporting bracket 23. In contrast, it must be considered that in other apparatuses of the same category the armature is made in two pieces for each coil. Furthermore the supporting bracket 23 of the electromagnetic coil 50f in the thermomagnetic switch also acts as a support for the bimetallic lever 22.

As shown in Figure 1, in the switch 1 according to the invention all the terminals have been standardized. The two terminals 106f and 106n of the differential switch 100 are made with the same dimensions and the same pitch as the terminals 70f and 70n of the thermomagnetic switch. By way of example, a pitch of 10.9 mm has been maintained, which remains constant even if other thermomagnetic switches are placed alongside.

Furthermore the terminals 106f e 106n of the differential switch 100 have been aligned in the same side as the terminals 70f and 70n of the thermomagnetic switch.

This leads to a greater practicality for the installers and to a greater simplification of the assembly of the components. Furthermore it allows a rapid connection with a movable terminal strip with a plurality of terminals, in the case of a plurality of differential thermomagnetic switches alongside each other.

In particular, as shown in Figures 11 and 12, in order to simplify the assembly operations, the return spring 28 is pre-mounted on the coupling lever 26, around the pin 27 of the coupling lever and with one end abutting on a protrusion 75. The spring 28 is retained on the coupling lever 26 by means of an L-shaped protrusion 75, formed in said coupling lever, so as to retain the spring until it is positioned on the switch.

Furthermore, it must be noted that the coupling lever 26 has two bottom arms 126 disposed in the phase and in the neutral housing to be operated respectively by the thrust pins 46 of the phase coil 50f and of the differential release coil 50d.

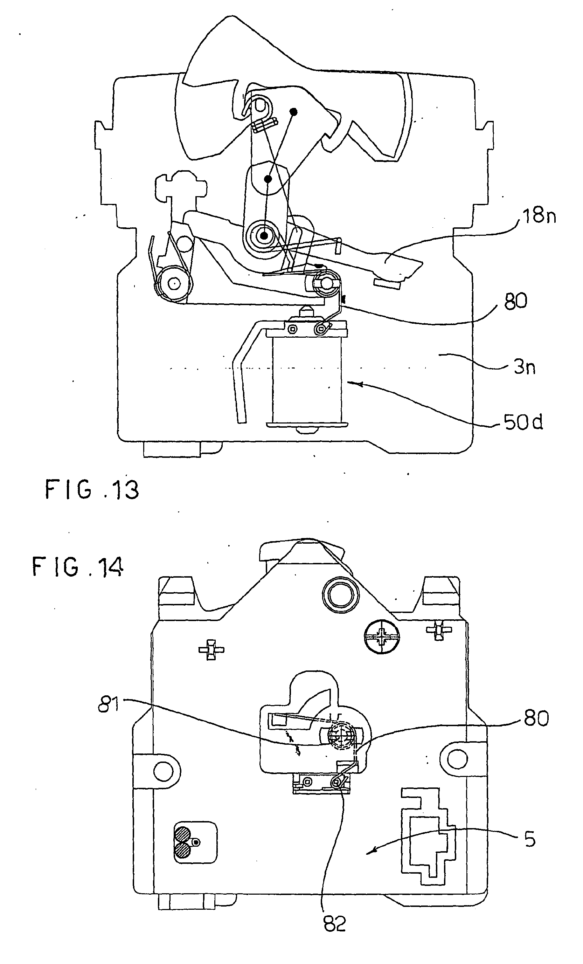

In particular, as shown in Figures 13 and 14, a supply spring 80 for the differential release coil 50d is provided. This spring 80 is premounted on the cover 5 on the neutral part and is retained thereon by means of protrusions (81, 82) formed in said cover, so as to retain the spring 80 in the seat provided. The electrical supply spring 80 for the differential release coil 50d acts as an electrical contact operated by the movable neutral contact 18n.

When the movable neutral contact 18n is in the closed position (in contact with the fixed contact 6n) it allows current to pass to supply the differential release coil 50d. When the movable contact 18n detaches from the fixed contact 6n the electrical supply of the release coil is interrupted.

The detachment of the movable contact 18n from the fixed contact 6n can take place manually through the operation of the push button 11 of the main lever, but it can also take place through an intervention for thermomagnetic release or for differential release, as described earlier.

This operating principle thus allows the safeguarding or the protection of the differential release coil 50d, of the resistor of the test circuit and of the electronic circuit 101 to which power is shut off due to the interventions described above. This operating principle allows the power to be supplied to the differential mini-switch, either from the top terminals or from the bottom terminals without distinction, thus the electrical power input can be one or the other, with great simplification for installers.

Numerous variations and modifications of detail within the reach of a person skilled in the art can be made to the present invention. as set forth in the appended claims.

## Claims

1. A thermomagnetic switch (1) comprising:
- a box-type body comprising an intermediate wall (3), which defines a phase housing (3f) and a neutral housing (3n),
- a fixed phase contact (6f) connected to a phase terminal (70f) destined to clamp the strands of a phase electrical wire,
- a fixed neutral contact (6n) connected to a neutral terminal (70n) destined to clamp the strands of a neutral electrical wire,
- a movable phase contact (18f) and a movable neutral contact (18n) destined to come into contact with the respective fixed phase and neutral contacts (6f, 6n),
- a kinematic mechanism connected to said movable contacts (18f, 18n) to bring them from a closed position in contact with the respective fixed contacts (6f, 6n) to an open position spaced apart from said fixed contacts (6f, 6n),
- an operating push button (11) that can be operated from the outside and that is connected to said kinematic mechanism,
- a coupling lever (26) connected to said kinematic mechanism that is adapted to be operated through the intervention of a thermal (22) and/or of an electromagnetic (50f) and/or of a differential device (100, 50d),
wherein
said kinematic mechanism comprises:
- a contact-carrying lever (17) made in a single piece and provided with two arms (121) which extend into the phase housing (3f) and into the neutral housing (3n), each arm (121) comprising a seat (118) designed to receive the respective movable phase and neutral contact (18f, 18n), said contact-carrying lever (17) being pivoted, by means of a pivoting axis (16), to said intermediate wall (3), and
- a toggle mechanism comprising:
- a primary lever (12) constrained to said operating push button (11) and pivoted to said intermediate wall (3),
- two transmission levers (15) disposed respectively in the phase (3f) and in the neutral housing (3n), each transmission lever being pivoted at one end to said primary lever (12) and at the other end to said pivoting axis (16) of the contact-carrying lever, the thermomagnetic switch (1) **characterized in that** the toggle mechanism comprises
- a traction spring (20) which has one end coupled to said primary lever (12) and another end coupled to a slot (117) of said contact-carrying lever (17).

2. A switch (1) according to claim 1, **characterized in that** said movable contacts (18f, 18n) are maintained in position in said seats (118) of the contact-carrying lever (17) by means of respective torsion springs (61) disposed around the pivoting axis (16) of said contact-carrying lever (17), in which each torsion spring (61) has one end disposed on the respective movable contact (18f, 18n) and the other end blocked by a respective protrusion (119) of said contact-carrying lever (17).

3. A switch (1) according to any one of the preceding claims, **characterized in that** said contact-carrying lever (17) comprises a coupling arm (122) disposed in the opposite direction with respect to said arms (121) of the seats of the movable contacts, said coupling arm (122) having one undercut end (120) designed to engage with said coupling lever (26).

4. A switch (1) according to any one of the preceding claims, **characterized in that** said thermal device comprises a bimetallic plate (22) which dilates when passed through by a high electric current, said bimetallic plate (22) being connected, by means of a plait of conductors (21), to said movable phase contact (18f) and being disposed near to a portion (25) of said coupling lever (26) to operate it so as to unbalance the kinematic mechanism.

5. A switch (1) according to any one of the preceding claims, **characterized in that** said electromagnetic device comprises an electromagnetic phase coil (50f) consisting of a cylindrical spool (30) whereon a winding (40) of copper windings is wound, a magnetic core (47) is disposed inside the spool (30) and a magnetic keeper (45), supporting a thrust pin (46) the end of which acts on said coupling lever (26), is mounted axially slidably.

6. A switch (1) according to claims 4 and 5, **characterized in that** said bimetallic plate (22) and said spool (30) of the phase electromagnetic coil (50f) are supported by a metal bracket (23) substantially L-shaped and disposed in said phase housing (3f).

7. A switch (1) according to claim 6, **characterized in that** one end of said winding (40) of the phase electromagnetic coil (50f) is fixed to said metal bracket (23) and the other end thereof is fixed to a terminal strip (41) for a phase electrical wire.

8. A switch (1) according to any one of the preceding claims, **characterized in that** said differential device comprises:
- an electronic circuit board (101) whereon a toroidal core (102), wherein a primary winding and a secondary winding are made to pass, is mounted and
- a differential release coil (50f) disposed in said neutral housing (3n) and consisting of a cylindrical spool (30) whereon a winding (40d) of copper windings is wound, inside the spool (30) a magnetic core (47) being disposed and a magnetic keeper (45) supporting a thrust pin (46), whose end acts on said coupling lever (26), being mounted axially slidably.

9. A switch (1) according to claims 5 and 8, **characterized in that** said coupling lever (26) is substantially L-shaped, is pivoted by means of a pin (27) to the intermediate wall (3) and has two arms (126) which extend respectively into the phase (3f) and neutral (3n) housings, said arms (126) of the coupling lever being operable respectively by the ends of said thrust pins (46) of the phase and of the differential electromagnetic coils (50f, 50d).

10. A switch (1) according to claim 9, **characterized in that** a torsion spring (28) disposed around said pivoting pin (27) and with one end retained by a protrusion (75) of said coupling lever (26) is pre-mounted in said coupling lever (26).

11. A switch (1) according to any one of claims 5 to 10, **characterized in that** said coupling lever (26) has a protruding part (125) disposed in the phase housing (3f) in which a regulation screw (25) whose tip is at a short distance from said bimetallic plate (22) is screwed.

12. A switch (1) according to any one of claims 8 to 11, **characterized in that** it comprises a supply spring (80) for the differential release coil (50d) which is pre-mounted on a cover (5) of the neutral housing (3n) and retained on said cover (5) by means of protrusions (81, 82) formed in said cover.

13. A switch (1) according to any one of claims 8 to 12, **characterized in that** said electronic circuit board (101) is disposed in a differential block (100) and is connected to a phase terminal (106f) and to a neutral terminal (106n), the two terminals (106f and 106n) of the differential block being made with the same dimensions and the same pitch as the terminals (70f and 70n) of the thermomagnetic switch so that said pitch is maintained constant even if there are other differential thermomagnetic switches placed alongside.

14. A switch (1) according to claim 13, **characterized in that** the terminals (106f, 106n) of the differential switch (100) are aligned in the same side as the terminals (70f, 70n) of the thermomagnetic switch.

## Patentansprüche

1. Thermomagnetischer Schalter (1), umfassend:
- einen quaderartigen Körper, welcher eine Zwischenwand (3) aufweist, die einen Phasen-Gehäusebereich (3f) und einen Neutralleiter-Gehäusebereich (3n) aufweist,
- einen festen Phasenkontakt (6f), welcher mit einer Phasenklemme (70f) verbunden ist, die dazu bestimmt ist, die Enden eines elektrischen Phasenleiters zu klemmen,
- einen festen Neutralleiterkontakt (6n), welcher mit einer Neutralleiterklemme (70n) verbunden ist, die dazu bestimmt ist, die Enden eines elektrischen Neutralleiters zu klemmen,
- einen beweglichen Phasenkontakt (18f) und einen beweglichen Neutralleiterkontakt (18n), welche dazu bestimmt sind, jeweils in Kontakt zu gelangen mit dem festen Phasenkontakt (6f) und mit dem festen Neutralleiterkontakt (6n),
- einen kinematischen Mechanismus, welcher mit den beweglichen Kontakten (18f, 18n) verbunden ist, um diese aus einer geschlossenen Stellung, jeweils in Kontakt mit einem der festen Kontakte (6f, 6n), in eine geöffnete Stellung zu bringen, beabstandet von den festen Kontakten (6f, 6n),
- einen Betätigungs-Druckschalter (11), welcher von außen betätigt werden kann, und welcher mit dem kinematischen Mechanismus verbunden ist,
- einen Koppelhebel (26), verbunden mit dem kinematischen Mechanismus, welcher angepasst ist, durch die Einwirkung einer thermischen (22) und/oder einer elektromagnetischen (50f) Vorrichtung und/oder mit einer Differenzstrom-Vorrichtung (100, 50d) betätigt zu werden,
wobei
der kinematische Mechanismus umfasst:
- einen Kontakte tragenden Hebel (17), welcher aus einem einzigen Stück hergestellt und mit zwei Armen (121) versehen ist, welche sich in den Phasen-Gehäusebereich (3f) und in den Neutralleiter-Gehäusebereich (3n) erstrecken, wobei jeder Arm (121) einen Sitz (118) umfasst, welcher gestaltet ist, jeweils den beweglichen Phasenkontakt (18f) und den Neutralleiterkontakt (18n) aufzunehmen, wobei der Kontakte tragende Hebel (17) schwenkbar ist, um eine Schwenkachse (16), bezogen auf die Zwischenwand (3), und
- einen Kniehebel-Mechanismus, umfassend:
- einen ersten Hebel (12), fixiert, bezogen auf den Betätigungs-Druckschalter (11), und schwenkbar, bezogen auf die Zwischenwand (3),
- zwei Übertragungshebel (15), jeweils angeordnet in dem Phasen-Gehäusebereich (3f) und in dem Neuttalleiter-Gehäusebereich (3n), wobei jeder der Übertragungshebel an einem Ende, bezogen auf den ersten Hebel (12), und am anderen Ende, bezogen auf die Schwenkachse (16) des Kontakte tragenden Hebels, schwenkbar ist, wobei der thermomagnetische Schalter (1) **dadurch gekennzeichnet ist, dass** der Kniehebelmechanismus umfasst:
- eine Zugfeder (20), welche ein Ende aufweist, das mit dem ersten Hebel (12) gekoppelt ist, und ein anderes Ende, das mit einem Schlitz (117) des Kontakte tragenden Hebels (17) gekoppelt ist.

2. Schalter (1) nach Anspruch 1, **dadurch gekennzeichnet, dass** die beweglichen Kontakte (18f, 18n) in den Sitzen (118) des Kontakte tragenden Hebels (17) jeweils mittels einer Schenkelfeder (61) in ihrer Position gehalten sind, welche um die Schwenkachse (16) des Kontakte tragenden Hebels (17) angeordnet ist, wobei jede der Schenkelfedern (61) ein Ende aufweist, welches jeweils an dem beweglichen Kontakt (18f, 18n) angeordnet ist, wobei das andere Ende jeweils durch einen Vorsprung (119) des Kontakte tragenden Hebels (17) blockiert ist.

3. Schalter (1) nach einem der vorhergehenden Ansprüche, **dadurch gekennzeichnet, dass** der Kontakte tragende Hebel (17) einen Koppelarm (122) aufweist, welcher in gegenüberliegender Richtung angeordnet ist, bezogen auf die Arme (121) der Sitze der beweglichen Kontakte, wobei der Koppelarm (122) ein unten eingeschnittenes Ende (120) aufweist, welches gestaltet ist, mit dem Koppelhebel (26) in Eingriff zu sein.

4. Schalter (1) nach einem der vorhergehenden Ansprüche, **dadurch gekennzeichnet, dass** die thermische Vorrichtung einen Bimetallstreifen (22) umfasst, in welchem es zu Dilatation kommt, wenn er von einem hohen elektrischen Strom durchflossen wird, wobei der Bimetallstreifen (22) mittels eines Geflechts aus Leitern (21), mit dem beweglichen Phasenkontakt (18f) verbunden ist, und wobei er nahe einem Abschnitt (25) des Koppelhebels (26) angeordnet ist, zum Betätigen desselben, um so den kinematischen Mechanismus auszulösen.

5. Schalter (1) nach einem der vorhergehenden Ansprüche, **dadurch gekennzeichnet, dass** die elektromagnetische Vorrichtung eine elektromagnetische Spule (50f) für die Phase aufweist, welche aus einem zylindrischen Spulenkörper (30) besteht, auf welchem eine Wicklung (40) aus Kupferwindungen angebracht ist, wobei ein Magnetkern (47) innerhalb des Spulenkörpers (30) angeordnet ist, und wobei ein magnetischer Anker (45), welcher einen Schubstift (46) stützt, dessen Ende auf den Koppelhebel (26) wirkt, axial verschiebbar angebracht ist.

6. Schalter (1) nach einem der Ansprüche 4 und 5, **dadurch gekennzeichnet, dass** der Bimetallstreifen (22) und der Spulenkörper (30) der elektromagnetischen Spule (50f) für die Phase durch einen metallenen Winkel (23) gehalten werden, welcher im Wesentlichen L-förmig ist, und welcher in dem Phasen-Gehäusebereich (3f) angeordnet ist.

7. Schalter (1) nach Anspruch (6), **dadurch gekennzeichnet, dass** ein Ende der Wicklung (40) der elektromagnetischen Spule (50f) für die Phase an dem metallenen Winkel (23) fixiert ist, und das andere Ende derselben an einer Klemmenleiste (41) fixiert ist, für einen elektrischen Phasenleiter.

8. Schalter (1) nach einem der vorhergehenden Ansprüche, **dadurch gekennzeichnet, dass** die Differenzstrom-Vorrichtung umfasst:
- eine elektronische Leiterplatte (101), an welcher ein Ringkern (102) befestigt ist, wobei ein erster Leiter und ein zweiter Leiter hindurchgeführt sind, und
- eine Differenzstrom-Auslösespule (50f), welche in dem Neutralleiter-Gehäusebereich (3n) angeordnet ist, und welche aus einem zylindrischen Spulenkörper (30) besteht, auf welchem eine Wicklung (40d) aus Kupferwindungen angebracht ist, wobei ein Magnetkern (47) innerhalb des Spulenkörpers (30) angeordnet ist, und wobei ein magnetischer Anker (45), welcher einen Schubstift (46) stützt, dessen Ende auf den Koppelhebel (26) wirkt, axial verschiebbar angebracht ist.

9. Schalter (1) nach Anspruch 5 und 8, **dadurch gekennzeichnet, dass** der Koppelhebel (26) im Wesentlichen L-förmig ist, dass er schwenkbar ist um einen Stift (27), bezogen auf die Zwischenwand (3), und dass er zwei Arme (126) aufweist, welche sich jeweils in den Phasen-Gehäusebereich (3f) und in den Neutralleiter-Gehäusebereich (3n) erstrecken, wobei die Arme (126) des Koppelhebels jeweils durch die Enden der Schubstifte (46) der Phasen-Magnetspulen und der Differenzstrom-Magnetspulen (50f, 50d) betätigbar sind.

10. Schalter (1) nach Anspruch 9, **dadurch gekennzeichnet, dass** eine Schenkelfeder (28), welche um den Schwenkstift (27) angeordnet ist, wobei ein Ende derselben durch einen Vorsprung (75) des Koppelhebels (26) festgehalten ist, in dem Koppelhebel (26) vormontiert ist.

11. Schalter (1) nach einem der Ansprüche 5 bis 10, **dadurch gekennzeichnet, dass** der Koppelhebel (26) einen vorspringenden Abschnitt (125) aufweist, welcher in dem Phasen-Gehäusebereich (3f) angeordnet ist, wobei eine Einstellschraube (25), deren Ende sich in geringer Entfernung von dem Bimetallstreifen (22) befindet, in denselben geschraubt ist.

12. Schalter (1) nach einem der Ansprüche 8 bis 11, **dadurch gekennzeichnet, dass** er eine Stromzufuhrfeder (80) für die Differenzstrom-Auslösespule (50d) aufweist, welche an einer Abdeckung (5) des Neutralleiter-Gehäusebereichs (3n) vormontiert ist, und welche an der Abdeckung (5) mittels Vorsprüngen (81, 82) festgehalten ist, die in der Abdeckung ausgebildet sind.

13. Schalter (1) nach einem der Ansprüche 8 bis 12, **dadurch gekennzeichnet, dass** die elektronische Leiterplatte (101) in einem Differenzstrom-Block (100) angeordnet ist, und dass sie mit einer Phasenklemme (106f) und mit einer Neutralleiterklemme (106n) verbunden ist, wobei die zwei Klemmen (106f und 106n) des Differenzstrom-Blocks mit denselben Abmessungen und derselben Beabstandung hergestellt sind wie die Klemmen (70f und 70n) des thermomagnetischen Schalters, derart, dass die Beabstandung konstant gehalten ist, selbst dann, wenn weitere thermomagnetische Differenzstromschalter daneben angeordnet sind.

14. Schalter (1) nach Anspruch 13, **dadurch gekennzeichnet, dass** die Klemmen (106f, 106n) des Differenzstromschalters (100) an derselben Seite angeordnet sind wie die Klemmen (70f, 70n) des thermomagnetischen Schalters.

## Revendications

1. Commutateur thermomagnétique (1) comprenant :
- un corps de type boîtier comprenant une paroi intermédiaire (3), qui définit un logement de base (3f) et un logement neutre (3n),
- un contact de phase fixe (6f) connecté à une borne de phase (70f) destiné à serrer les brins d'un fil électrique de phase,
- un contact neutre fixe (6n) connecté à une borne neutre (70n) destinée à serrer les brins d'un fil électrique neutre,
- un contact de phase mobile (19f) et un contact neutre mobile (18n) destinés à venir en contact avec les contacts de phase neutre et neutre respectifs (6f,6n),
- un mécanisme cinématique connecté auxdits contacts mobiles (18f,18n) afin de les amener d'une position fermée en contact avec les contacts fixes respectifs (6f,6n) à une position fermée espacée desdits contacts fixes (6f,6n),
- un bouton poussoir opérationnel (11) qui peut être actionné à partir de l'extérieur et qui est connecté audit mécanisme cinématique,
- un levier de couplage (26) connecté audit mécanisme cinématique qui est adapté afin d'être actionné via l'intervention d'un dispositif thermique (22) et/ou électromagnétique (50f) et/ou différentiel (100,50d),
dans lequel
ledit mécanisme cinématique comprend :
- un levier porte contact (17) constitué d'une pièce individuelle et pourvue de deux bras (121) qui s'étendent'à l'intérieur du logement de phase (3f) et à l'intérieur du logement neutre (3n), chaque bras (121) comprenant un siège (118) conçu afin de recevoir le contact de phase mobile et neutre respectifs (18f,18n), ledit levier porte contact (17) étant pivoté, au moyen d'un axe de pivotement (16), à vers ladite paroi intermédiaire (3), et
- un mécanisme de bascule comprenant :
- un levier primaire (12) contraint vers ledit bouton poussoir opérationnel (11) et pivoté vers ladite paroi intermédiaire (3),
- deux leviers de transmission (15) disposés respectivement dans le logement de phase (3f) et dans le logement neutre (3n), chaque levier de transmission étant pivoté à une extrémité vers ledit levier primaire (12) et à l'autre extrémité vers ledit axe de pivotement (16) du levier porte contact, le commutateur thermomagnétique (1) étant **caractérisé en ce que** le mécanisme de bascule comprend
- un ressort de traction (20) qui possède une extrémité couplée audit levier primaire (12) et une autre extrémité couplée à une fente (117) dudit levier porte contact (17).

2. Commutateur (1) selon la revendication 1, **caractérisé en ce que** lesdits contacts mobiles (18f,18n) sont maintenus en position dans lesdits sièges (118) du levier porte contact (17) au moyen de ressorts de torsion (61) respectifs disposés autour de l'axe de pivotement (16) dudit levier porte contact (17), dans lequel chaque ressort de torsion (61) possède une extrémité disposée sur le contact mobile respectif (18f,18n) et l'autre extrémité bloquée par une protubérance respective (119) dudit levier porte contact (17).

3. Commutateur (1) selon une quelconque des revendications précédentes, **caractérisé en ce que** ledit levier porte contacteur (17) comprend un bras de couplage (122) disposé dans la direction opposée par rapport auxdits bras (121) des sièges des contacts mobiles, ledit bras de couplage (122) possédant une extrémité en contre-dépouille (120) conçue afin de venir en prise avec ledit levier de couplage (26).

4. Commutateur (1) selon une quelconque des revendications précédentes, **caractérisé en ce que** ledit dispositif thermique comprend une plaque bimétallique (22) qui se dilate quand elle est traversée par un courant électrique élevé, ladite plaque bimétallique (22) étant connectée, au moyen d'une paire de conducteurs (21), audit contact de phase mobile (18f) et étant disposée près d'une portion (25) dudit levier de couplage (26) afin de l'actionner de manière à déséquilibrer le mécanisme cinématique.

5. Commutateur (1) selon une quelconque des revendications précédentes, **caractérisé en ce que** ledit dispositif électromagnétique comprend une bobine de phase électromagnétique (50f) constituée d'un fuseau cylindrique (30) sur lequel un enroulement (40) de spires de cuivre est enroulé, un noyau magnétique (47) est disposé à l'intérieur du fuseau (30) et une armature magnétique (45), supportant un axe formant butée (46) dont l'extrémité agit sur ledit levier de couplage (26), est montée de manière coulissante axialement.

6. Commutateur (1) selon les revendications 4 et 5, **caractérisé en ce que** ladite plaque bimétallique (22) et ledit fuseau (30) de la bobine électromagnétique de phase (50f) sont supportées par un support de métal (23) substantiellement en forme de L et disposé dans ledit logement de phase (3f).

7. Commutateur (1) selon la revendication 6, **caractérisé en ce que** une extrémité dudit enroulement (40) de la bobine électromagnétique de phase (50f) est fixée audit support de métal (23) et l'autre extrémité de celui-ci est fixée à une bande de borne (41) destinée à un fil électrique de phase.

8. Commutateur (1) selon une quelconque des revendications précédentes, **caractérisé en ce que** ledit dispositif différentiel comprend :
- une carte de circuit électronique (101) sur laquelle un noyau toroïdal (102), dans lequel une spire primaire et une spire secondaire sont amenées à passer, est monté et
- une bobine de déclenchement différentielle (50f) disposée dans ledit logement neutre (3n) et constituée d'un fuseau cylindrique (30) sur lequel un enroulement (40d) de spires de cuivre est enroulé, à l'intérieur du fuseau (30) un noyau magnétique (47) étant disposé et une armature magnétique (45) supportant un axe formant butée (46), dont l'extrémité agit sur ledit levier de couplage (26), étant montée de manière coulissante axiale.

9. Commutateur (1) selon les revendications 5 et 8, **caractérisé en ce que** ledit levier de couplage (26) est substantiellement en forme de L, est pivoté au moyen d'une goupille (27) vers la paroi intermédiaire (3) et possède deux bras (126) qui s'étendent respectivement dans les logements de phase (3f) et neutre (3n), lesdits bras (126) du levier de couplage pouvant être activés respectivement par les extrémités desdits axes formant butée (46) des bobines de phase et électromagnétique différentielle (50f,50d).

10. Commutateur (10) selon la revendication 9, **caractérisé en ce que** un ressort de torsion (28) disposé autour de ladite goupille de pivotement (27) et avec une extrémité retenue par une protubérance (75) dudit levier de couplage (26) est pré-monté dans ledit levier de couplage (26).

11. Commutateur (1) selon une quelconque des revendications 5 à 10, **caractérisé en ce que** ledit levier de couplage (26) possède une partie protubérante (125) disposée dans le logement de phase (3f) dans laquelle une vis de régulation (25) dont la pointe est à une courte distance de ladite plaque bimétallique (22) est vissée.

12. Commutateur (1) selon une quelconque des revendications 8 à 11, **caractérisé en ce que** il comprend un ressort d'alimentation (80) pour la bobine de déclenchement différentielle (50d) qui est pré-monté sur un couvercle (5) du logement neutre (3n) et retenu sur ledit couvercle (5) au moyen de protubérances (81,82) formées dans ledit couvercle.

13. Commutateur (1) selon une quelconque des revendications 8 à 12, **caractérisé en ce que** ladite carte de circuit électronique (101) est disposée dans un bloc différentiel (100) et est connectée à une borne de phase (106f) et à une borne neutre (106n), les deux bornes (106f et 106n) du bloc différentiel étant fabriquées avec les mêmes dimensions et le même pas primitif que les bornes (70f et 70n) du commutateur thermomagnétique de sorte que ledit pas primitif soit maintenu constant même si d'autres commutateurs thermomagnétiques différentiels sont placés le long de celui-ci.

14. Commutateur (1) selon la revendication 13, **caractérisé en ce que** les bornes (106f,106n) du commutateur différentiel (100) sont alignées sur le même côté que les bornes (70f,70n) du commutateur thermomagnétique.
